# EUROPÄISCHE PATENTSCHRIFT

(11) **EP 3 500 393 B1**
(45) Veröffentlichungstag und Bekanntmachung des Hinweises auf die Patenterteilung: **07.04.2021**
(21) Anmeldenummer: 17752324.8
(22) Anmeldetag: 28.07.2017
(51) Int. Cl.: B23K 26/04, B23K 26/14, B23K 26/03

(54) **ISOLATIONSTEIL ZUR ISOLIERTEN HALTERUNG EINER ELEKTRISCH LEITENDEN DÜSE UND LASERBEARBEITUNGSKOPF MIT EINER SENSORANORDNUNG ZUR ERKENNUNG EINES DERARTIGEN ISOLATIONSTEILS**
INSULATION PART FOR THE INSULATED MOUNTING OF AN ELECTRICALLY CONDUCTIVE NOZZLE AND LASER PROCESSING HEAD WITH A SENSOR ASSEMBLY FOR DETECTING SUCH AN INSULATION PART
PIECE D'ISOLATION POUR LE MONTAGE ISOLE D'UNE BUSE ELECTRIQUEMENT CONDUCTRICE ET TETE DE TRAITEMENT LASER AVEC UN ENSEMBLE CAPTEUR POUR DETECTER UNE TELLE PARTIE D'ISOLATION

(30) Priorität: 19.08.2016 DE 102016115415
(43) Veröffentlichungstag der Anmeldung: 26.06.2019
(73) Patentinhaber: Precitec GmbH & Co. KG, 76571 Gaggenau-Bad Rotenfels (DE)
(72) Erfinder: SPÖRL, Georg, 76287 Rheinstetten (DE)
(74) Vertreter: Ter Meer Steinmeister & Partner
(86) Internationale Anmeldenummer: PCT/EP2017/069227
(87) Internationale Veröffentlichungsnummer: WO 2018/033372

(56) Entgegenhaltungen:
- WO-A1-2013/071283
- DE-A1- 1 765 002
- DE-A1- 4 217 292
- DE-C1- 3 719 552
- DE-U1-202010 004 903

## Beschreibung

Die Erfindung betrifft ein Isolationsteil zur isolierten Halterung einer elektrisch leitenden Düse, insbesondere einer Schneiddüsenspitze an einem Laserbearbeitungskopf sowie einen damit versehenen Laserbearbeitungskopf, insbesondere einen Laserbearbeitungskopf mit integrierter kapazitiver Abstandsregelung.

Um bei der Laserbearbeitung optimale Bearbeitungsqualität und höchste Bearbeitungsgeschwindigkeit erreichen zu können, ist es erforderlich, dass der Abstand zwischen Werkstück und Laserbearbeitungskopf, insbesondere der Abstand zwischen Schneiddüse und Werkstück konstant gehalten werden, da schon kleinste Abweichungen die Bearbeitungsqualität verschlechtern. Insbesondere beim Laserschneiden führen Abweichungen vom Soll-Abstand zur Gratbildung oder beeinflussen die Schnittgeschwindigkeit, die Rautiefe der Schnittflächen und die Spaltbreite ungünstig. Daher werden Laserbearbeitungsköpfe, insbesondere Laserschneidköpfe mit einer kapazitiven Abstandssensorik zur kapazitiven Messung des Abstandes zwischen Werkstück und Schneiddüse ausgerüstet. Die Abstandssensorik weist als Sensorelektrode eine leitende Schneiddüsenspitze auf, die mit dem Werkstück den in einen Schwingkreis integrierten Messkondensator bildet. Um die leitende Schneiddüsenspitze am Düsenkörper des Laserbearbeitungskopfes zu befestigen, werden häufig Teile eingesetzt, die nicht nur zur Halterung der leitenden Düsenspitze, sondern auch zu deren elektrischer Isolation gegenüber dem Düsenkörper und dem Gehäuse dienen.

Isolationsteile bekannter Bauart werden häufig aus Keramik Material, Aluminium mit isolierender Beschichtung oder mit einer Isolierung durch Kunststoffringe hergestellt.

Falls der Anwender vergisst, dieses Isolationsteil einzusetzen und die Abstandsregelung startet, wird der Laserbearbeitungskopf gegen das Werkstück bewegt und kollidiert mit diesem, da die Düsenspitze dann ebenso wie das Werkstück auf Masse liegt, so dass kein Kondensator zwischen Düsenspitze und Werkstück ausgebildet werden kann.

Aus der DE 101 21 655 C1 ist ein Verfahren bekannt, bei dem durch die Überwachung der internen Kapazität der Düsenanordnung erkannt werden kann, wenn das Isolationsteil fehlt. Durch eine entsprechende Signalverarbeitung kann dann eine Kollision des Laserbearbeitungskopfes mit dem Werkstück verhindert werden. Dieses Verfahren setzt jedoch voraus, dass die Düsenhalterung mit der leitenden Düsenspitze eine interne Kapazität ausbilden und dadurch auf das Vorhandensein einer Isolation überwacht werden kann.

Bei Kapazitätsmesseinrichtungen für die Abstandsregelung, die nach dem Prinzip der aktiven Schirmung funktionieren, wird die interne Kapazität durch das Messverfahren eliminiert und kann deshalb nicht zur Überwachung herangezogen werden.

Aus der DE 199 06 442 A1 ist ein Verfahren zum kapazitiven Messen des Abstands zwischen einer Sensorelektrode und einem Werkstück bekannt, bei dem die Messleitung zur Sensorelektrode aktiv abgeschirmt wird, wobei die über die Messleitung abgegriffene Messspannung über einen Impedanzwandler an die Abschirmung der Messleitung angelegt wird. Auf diese Weise lassen sich interne oder Streukapazitäten, die zur Messkapazität parallel liegen, wesentlich verringern. Damit stehen die internen oder Streukapazitäten aber auch nicht zur Überwachung des Vorhandenseins oder Fehlens eines Isolationsteils zur Verfügung.

Aus der DE 42 01 640 C1 ist es bekannt, in einem Isolationsteil zwei Leitungen vorzusehen, die über die leitende Düsenspitze miteinander verbunden werden. Eine Unterbrechung dieser Verbindung kann ausgewertet werden, um festzustellen, ob das Isolationsteil vorhanden ist oder nicht oder ob das Sensorelement fehlt. Diese Lösung ist jedoch mechanisch sehr aufwändig und erzeugt dadurch Kosten, die für ein Verschleißteil unverhältnismäßig hoch sind.

Aus der EP 1 977 193 B1 ist ein zweiteilig aufgebauter Isolator zur isolierten Halterung einer elektrisch leitenden Düse an einem Laserbearbeitungskopf bekannt, der aus einem Isolationsteil zur elektrischen Isolation und einem Abschirmungsteil zur Abschirmung gegen Strahlung und/oder Wärme besteht und der eine zentrale Durchgangsöffnung für einen Arbeitslaserstrahl aufweist. Die zweiteilige Ausführungsform des Isolators ermöglicht es, einen produktionstechnisch einfacheren und damit kostengünstigen Isolator für einen Laserbearbeitungskopf zur Verfügung zu stellen. Das Abschirmungsteil dient zur Abschirmung gegen von einem Werkstück zurück reflektierter Laserstrahlung und besteht aus einem nicht leitenden, gegen Hitze beständigen Material.

Die EP 2 444 183 A1 beschreibt einen Isolationsabschnitt eines Laserbearbeitungskopfes zur Halterung einer elektrisch leitenden Düse. Der Isolationsabschnitt umfasst ein äußeres Isolationsteil und ein inneres Isolationsteil, die koaxial zueinander angeordnet sind und eine zentrale Durchgangsöffnung für einen Arbeitslaserstrahl aufweisen. In der Durchgangsöffnung des äußeren Isolationsteils ist eine Aufnahme für ein Sensorteil vorgesehen, die eine Art Metall-Interface zwischen einem Kontaktstift im Isolationsabschnitt und der elektrisch leitenden Düse bildet. Das innere Isolationsteil kann als einfache Metallhülse ausgebildet sein und aus Messing, Aluminium, Kupfer oder Edelstahl bestehen. Der Isolationsabschnitt ermöglicht es, mit dem ersten Isolationsteil eine elektrische Isolation bereitzustellen und mit dem zweiten Isolationsteil das erste Isolationsteil gegen thermische Einwirkungen des Arbeitslaserstrahls abzuschirmen.

Die DE 42 17 292 A1, welche den Obergriff der Ansprüche 1 und 3 offenbart, betrifft eine kapazitives Abstandsmessverfahren und beschreibt eine Laserbearbeitungsdüse mit einem Düsenkörper, der aus elektrisch leitendem Material besteht, und einer an der Spitze des Düsenkörpers angeordnete Düsenelektrode, die gegenüber dem Düsenkörper elektrisch isoliert ist. Beispielsweise kann die Düsenelektrode in einem Keramikkörper ruhen, der seinerseits an der Spitze des Düsenkörpers aufgenommen wird.

Die WO 2013/071283 A1 betrifft eine dynamische Abstandsregelung für ein Laserbearbeitungssystem und beschreibt einen Laserbearbeitungskopf, an dessen Hauptgehäuse eine Kupferdüse, durch die der Laserstrahl austritt, vorgesehen ist. Die Kupferdüse ist dabei mittels eines keramischen Isolators an einen isolierten Sensorblock angebracht, der seinerseits durch einen Isolator am Hauptgehäuse des Schneidkopfes gehalten ist.

Der Erfindung liegt daher die Aufgabe zugrunde, ein Isolationsteil für die Halterung einer Düsenspitze an einem Laserbearbeitungskopf bereitzustellen, das kostengünstig in der Herstellung ist und dessen Fehlen oder Vorhandensein an einem Laserbearbeitungskopf anwenderfreundlich überwacht werden kann. Der Erfindung liegt ferner die Aufgabe zugrunde, einen Laserbearbeitungskopf zu schaffen, der für eine anwenderfreundliche Überwachung des Fehlens oder Vorhandenseins des Isolationsteils geeignet ist.

Diese Aufgaben werden durch das Isolationsteil nach Anspruch 1 bzw. den Laserbearbeitungskopf nach Anspruch 6 gelöst.

Erfindungsgemäß umfasst also ein Isolationsteil, das eine elektrisch leitende Düse gegenüber einem Gehäuse eines Laserbearbeitungskopfes isoliert an diesem hält, ein Stück aus einem ferromagnetischen Material, dessen Anwesenheit mit einem Sensor erkannt werden kann. Diese Ausgestaltung des Isolationsteils ermöglicht nicht nur eine kostengünstige Herstellung des Isolationsteils, sondern auch eine anwenderfreundliche Überwachung der Anwesenheit des Isolationsteils, so dass die Gefahr einer Beschädigung eines Laserbearbeitungskopfes aufgrund einer fehlerhaften Abstandsregelung sicher ausgeschlossen werden kann.

Bei einer vorteilhaften Ausgestaltung der Erfindung ist vorgesehen, dass der elektrisch isolierende Körper ein Keramikkörper ist, in den der ferromagnetische Körper eingebettet ist. Aufgrund dieser Ausbildung des Isolationsteils kann dieses besonders kostengünstig hergestellt werden, da die Herstellung bis auf das Einbetten des ferromagnetischen Körpers auf die gleiche Weise erfolgen kann wie bei herkömmlichen Isolationsteilen.

Bei einer anderen Ausgestaltung der Erfindung ist vorgesehen, dass das Isolationsteil einen ringförmigen ferromagnetischen Körper umfasst, der in eine elektrisch isolierende Beschichtung aus Kunststoff eingebettet ist.

Anstelle der Verwendung eines ferromagnetischen Materials, wie beispielsweise Eisen, ist es gemäß einer Weiterbildung der Erfindung auch möglich, eine Legierung mit niedriger Curie Temperatur, insbesondere eine Legierung auf Nickel/Kobalt/Eisen-Basis zu verwenden. Bei Temperaturen unterhalb der Curie-Temperatur lässt sich mit einem derartigen ferromagnetischen Körper die Anwesenheit des Isolationsteils erkennen. Steigt die Temperatur des Laserbearbeitungskopfes und damit die Temperatur des ferromagnetischen Körpers über dessen Curie Temperatur an, so lässt sich der Körper nicht mehr von einem Sensor erfassen, der daraufhin ein entsprechendes Warnsignal an eine Maschinensteuerung ausgibt. Somit lässt sich auf einfache Weise nicht nur das Vorhandensein einer Isolierung der leitenden Düse überwachen, sondern auch der Laserbearbeitungskopf vor einer Überhitzung schützen.

Eine vorteilhafte Ausgestaltung der Erfindung zeichnet sich dadurch aus, dass an einem Gehäuse eines Laserbearbeitungskopfes, an dem eine elektrisch leitende Düse eines Abstandsmesskreises mittels eines erfindungsgemäßen Isolationsteil gehalten ist, ein Sensor zur Erkennung des ferromagnetische Körper des Isolationsteils vorgesehen ist, der mit einem Überwachungsschaltkreis verbunden ist, der bei fehlendem Isolationsteil ein Warnsignal ausgibt.

Die Erfindung wird im Folgenden beispielsweise anhand der Zeichnung näher erläutert. Es zeigen:
Figur 1 eine schematische, vereinfachte Schnittansicht eines Laserbearbeitungskopfes, und
Figur 2 eine schematische, vereinfachte Schnittansicht eines weiteren Isolationsteils für einen Laserbearbeitungskopf.

In den verschiedenen Figuren der Zeichnung sind einander entsprechende Bauelemente mit gleichen Bezugszeichen versehen.

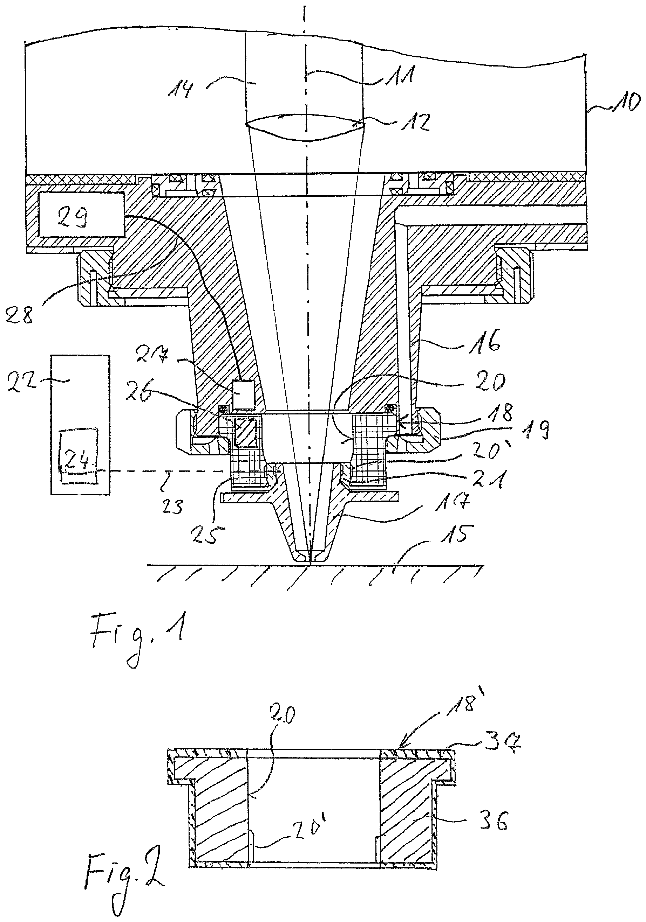

Wie in Figur 1 dargestellt, weist ein Laserbearbeitungskopf ein Gehäuse 10 auf, durch das ein Arbeitslaserstrahlengang 11 geführt ist, in dem eine Linsenanordnung 12 zur Fokussierung eines Arbeitslaserstrahls 14 auf ein Werkstück 15 vorgesehen ist. Am bearbeitungsseitigen Ende des Gehäuses 10 ist ein Düsenkörper 16 angebracht, an dem eine elektrisch leitende Düse 17 vorgesehen ist, die gegenüber dem Düsenkörper 16 durch ein Isolationsteil 18 elektrisch isoliert ist. Das Isolationsteil 18 ist am Düsenkörper 16 beispielsweise mittels einer Überwurfmutter 19 befestigt. Wie besonders gut in Figur 2 zu erkennen ist, weist das Isolationsteil 18, 18' eine zentrale Durchgangsöffnung 20 auf, die an ihrem bearbeitungsseitigen Ende mit einem Innengewinde 20' versehen ist, in das die elektrisch leitende Düse 17 mit einem entsprechenden Gegengewinde 21 eingeschraubt ist.

Die elektrisch leitende Düse 17, die beispielsweise aus Kupfer besteht, ist mit einem Schwingkreis 24 eines kapazitiven Abstandsmesskreises 22 elektrisch verbunden, wie durch die gestrichelte Linie 23 schematisch angedeutet ist. Die elektrisch leitende Düse 17 bildet zusammen mit dem Werkstück 15 einen Kondensator, der in den Schwingkreis 24 des kapazitiven Abstandsmesskreises 22 eingebunden ist, und dessen Kapazität sich mit dem Abstand zwischen Laserbearbeitungskopf und Werkstück 15, also mit dem Abstand zwischen elektrisch leitender Düse 17 und Werkstück 15 ändert. Die kapazitive Abstandsmessung ist dem Fachmann geläufig und beispielsweise in den eingangs zum Stand der Technik genannten Druckschriften beschrieben. Die Abstandsmessung braucht daher nicht näher erläutert zu werden.

Gemäß einem ersten Ausführungsbeispiel der Erfindung weist das Isolationsteil 18 einen ringförmigen Keramikkörper 25 auf, in den ein ferromagnetischer Körper 26 eingebettet ist. Dem ferromagnetischen Körper 26 gegenüber liegend ist im Düsenkörper 16 ein Sensor 27 zur Erkennung des ferromagnetischen Körpers 26 angeordnet. Der Sensor 27 ist über eine Leitung 28 mit einem Überwachungsschaltkreis 29 verbunden, der bei fehlendem Isolationsteil 18 ein Warnsignal an eine nicht dargestellte Maschinensteuerung ausgibt und damit die Abstandsregelung blockiert.

Alternativ dazu kann das Isolationsteil 18' auch einen ferromagnetischen Körper 36 aufweisen, der im Wesentlichen die Form des ringförmigen Keramikkörpers 25 aufweist und der in eine Kunststoffbeschichtung oder -ummantelung 37 eingebettet ist. Anstelle der isolierenden Beschichtung können auch in nicht näher dargestellter Weise Kunststoffringe vorgesehen werden, die die erforderliche Isolation der elektrisch leitenden Düse 17 gegenüber dem Düsenkörper 16 und dem Gehäuse 10 des Laserbearbeitungskopfes realisieren.

Anstelle eines ferromagnetischen Materials, wie zum Beispiel Eisen, kann auch eine Legierung mit niedriger Curie Temperatur, insbesondere eine Legierung auf Nickel/Kobalt/Eisen (NiCoFe)-Basis vorgesehen sein. Derartige Legierungen auf NiCoFe-Basis mit weiteren metallischen und nicht-metallischen Zusätzen, die unterhalb ihrer Curie Temperatur ferromagnetisch sind, die aber bei Überschreiten der Curie Temperatur ihre ferromagnetische Eigenschaft verlieren, sind im Stand der Technik bekannt. Aufgrund dieser Eigenschaft ist es dann möglich, bei geeignet gewählter Legierung mit passender Curie Temperatur den Laserbearbeitungskopf vor Überhitzung zu schützen, da bei Überschreiten der Curie Temperatur der ferromagnetische Körper 26, 36 nicht mehr detektiert werden kann, so dass der Überwachungsschaltkreis 29 ein entsprechendes Warnsignal an die Maschinensteuerung ausgibt, die daraufhin die laufende Bearbeitung eines Werkstücks unterbricht.

Erfindungsgemäß lässt sich also die Anwesenheit des Isolationsteils 18 zwischen elektrisch leitender Düse 17 und Düsenkörper 16 oder Gehäuse 10 auf einfache Weise durch Erkennen des im Isolationsteil eingebetteten ferromagnetischen Körpers 26, 36 überwachen, so dass eine Kollision zwischen Laserbearbeitungskopf und Werkstück aufgrund einer fehlerhaften kapazitiven Abstandsmessung sicher ausgeschlossen werden kann.

## Patentansprüche

1. Isolationsteil zur isolierten Halterung einer elektrisch leitenden Düse (17) an einem Laserbearbeitungskopf (10), mit einem ringförmigen elektrisch isolierenden Körper (25), der eine zentrale Durchgangsöffnung (20) für einen Arbeitslaserstrahlengang (11) aufweist, **dadurch gekennzeichnet, dass** es einen ferromagnetischen Körper (26) aufweist.

2. Isolationsteil nach Anspruch 1, **dadurch gekennzeichnet, dass** der elektrisch isolierenden Körper (25) ein Keramikkörper ist, in den der ferromagnetische Körper (26) eingebettet ist.

3. Isolationsteil zur isolierten Halterung einer elektrisch leitenden Düse (17) an einem Laserbearbeitungskopf (10), **dadurch gekennzeichnet, dass** es einen ringförmigen ferromagnetischen Körper (36) mit einer zentralen Durchgangsöffnung (20) für einen Arbeitslaserstrahlengang (11) aufweist, der in elektrisch isolierenden Kunststoff (37) eingebettet ist.

4. Isolationsteil nach Anspruch 1, 2 oder 3, **dadurch gekennzeichnet, dass** der ferromagnetische Körper (26, 36) aus einer Legierung mit einer so niedrigen Curie Temperatur besteht, dass ein Laserbearbeitungskopf mit angebrachtem Isolationsteil vor Überhitzung geschützt werden kann.

5. Isolationsteil nach Anspruch 4, **dadurch gekennzeichnet, dass** die Legierung mit niedriger Curie Temperatur eine Legierung auf Nickel/Kobalt/Eisen (NiCoFe)-Basis ist.

6. Laserbearbeitungskopf mit einem Gehäuse (10), durch das ein Arbeitslaserstrahlengang (11) geführt ist, der bearbeitungsseitig durch eine elektrisch leitende Düse (17) austritt, die an einem am Gehäuse (10) gehaltenen Isolationsteil (18, 18') nach einem der vorstehenden Ansprüche gehalten ist und die zur kapazitiven Abstandsmessung elektrisch mit einem Schwingkreis (24) eines Abstandsmesskreises (22) verbunden ist, wobei am Gehäuse (10) ein Sensor (27) zur Erkennung des ferromagnetischen Körpers (26, 36) des Isolationsteils (18, 18') vorgesehen ist, der mit einem Überwachungsschaltkreis (29) verbunden ist, der bei fehlendem Isolationsteil (18) ein Warnsignal ausgibt.

## Claims

1. Insulation part for the insulated holding of an electrically conductive nozzle (17) on a laser processing head (10), the insulation part having an annular, electrically insulating body (25) which has a central through-opening (20) for a working laser beam path (11), **characterized in that** it has a ferromagnetic body (26).

2. Insulation part according to claim 1, **characterized in that** the electrically insulating body (25) is a ceramic body in which the ferromagnetic body (26) is embedded.

3. Insulation part for the insulated holding of an electrically conductive nozzle (17) on a laser processing head (10), **characterized in that** it has an annular ferromagnetic body (36) having a central through-opening (20) for a working laser beam path (11), which body is embedded in electrically insulating plastics material (37).

4. Insulation part according to claim 1, 2 or 3, **characterized in that** the ferromagnetic body (26, 36) consists of an alloy having such a low Curie temperature that a laser processing head with the insulation part attached can be protected from overheating.

5. Insulation part according to claim 4, **characterized in that** the alloy having a low Curie temperature is an alloy based on nickel/cobalt/iron (NiCoFe).

6. Laser processing head having a housing (10) through which a working laser beam path (11) is guided, which working laser beam path exits on the processing side through an electrically conductive nozzle (17) which is held on an insulation part (18, 18') according to any of the preceding claims held on the housing (10) and which is electrically connected to an oscillating circuit (24) of a distance measuring circuit (22) for capacitive distance measurement, wherein a sensor (27) for detecting the ferromagnetic body (26, 36) of the insulation part (18, 18') is provided on the housing (10), which sensor is connected to a monitoring circuit (29) which outputs a warning signal if the insulation part (18) is missing.

## Revendications

1. Pièce d'isolation destinée à supporter une buse électriquement conductrice (17) de manière isolée sur une tête d'usinage au laser (10), ayant un corps annulaire électriquement isolant (25) comportant un orifice de passage central (20) pour un trajet de faisceau laser de travail (11), **caractérisée en ce qu'**elle comporte un corps ferromagnétique (26).

2. Pièce d'isolation selon la revendication 1, **caractérisée en ce que** le corps électriquement isolant (25) est un corps en céramique dans lequel le corps ferromagnétique (26) est incorporé.

3. Pièce d'isolation destinée à supporter une buse électriquement conductrice (17) de manière isolée sur une tête d'usinage au laser (10), **caractérisée en ce qu'**elle comporte un corps annulaire ferromagnétique (36) avec un orifice de passage central (20) pour un trajet de faisceau laser de travail (11), lequel corps est incorporé dans une matière plastique électriquement isolante (37).

4. Pièce d'isolation selon la revendication 1, 2 ou 3, **caractérisée en ce que** le corps ferromagnétique (26, 36) est constitué d'un alliage ayant une température de Curie si basse qu'une tête d'usinage au laser avec une pièce d'isolation fixée peut être protégée contre la surchauffe.

5. Pièce d'isolation selon la revendication 4, **caractérisée en ce que** l'alliage à basse température de Curie est un alliage à base de nickel/cobalt/fer (NiCoFe).

6. Tête d'usinage au laser avec un boîtier (10), à travers lequel est guidé un trajet de faisceau laser de travail (11) sortant, côté usinage, à travers une buse électriquement conductrice (17) qui est maintenue sur une pièce d'isolation (18, 18') maintenue sur le boîtier (10) selon l'une des revendications précédentes et qui est reliée à un circuit oscillant (24) d'un circuit de mesure de distance (22) pour une mesure de distance capacitive, dans laquelle un capteur (27) est prévu sur le boîtier (10) pour détecter le corps ferromagnétique (26, 36) de la pièce isolante (18, 18'), laquelle pièce d'isolation est reliée à un circuit de surveillance (29) qui émet un signal d'avertissement en cas d'absence de la pièce d'isolation (18).
